# EUROPEAN PATENT SPECIFICATION

(11) **EP 0 610 071 B1**
(45) Date of publication and mention of the grant of the patent: **05.01.2000**
(21) Application number: 94300753.4
(22) Date of filing: 01.02.1994
(51) Int. Cl.: H01M 4/62, H01M 10/40

(54) **Electrochemical cells using a polymer electrolyte**
Polymerelektrolyt enthaltende elektrochemische Zellen
Eléments électrochimiques à électrolyte polymère

(30) Priority: 05.02.1993 US 12689
(43) Date of publication of application: 10.08.1994
(60) Divisional application: 99108134.0
(73) Proprietor: EVEREADY BATTERY COMPANY, INC., St. Louis Missouri 63164 (US)
(72) Inventor: Bailey, John C, Ohio 44028 (US)
(74) Representative: Lord, Hilton David

(56) References cited:
- EP-A- 0 318 161
- EP-A- 0 378 123
- EP-A- 0 396 324
- GB-A- 2 018 015
- US-A- 4 902 589

## Description

The present invention relates to a process for preparing an electrochemical cell comprising a polymer electrolyte.

Polymer electrolytes are typically either solid or semi-solid and their use in electrochemical cells may eliminate the need for a microporous separator in the cell, as well as rendering the resultant cell free of liquid electrolyte. Conventional cells in which the electrolyte is an organic liquid normally contain a microporous separator; however, these separators are an expensive component of the cell. Furthermore, such separators can increase the internal resistance of the cell and, consequently, may decrease the high rate performance of the cell. The liquid organic electrolytes used in such conventional cells are often highly volatile liquids and, if these liquids escape from the cell, a hazardous situation can occur.

Polymer electrolytes are known and typically comprise a polymer matrix material and an ionically conductive salt. Examples of polymer matrix materials which are generally used in such electrolytes include the polyalkylene oxides, such as polyethylene oxide or polypropylene oxide; and substituted polyethylene glycols lonically conductive salts which form the second part of the electrolyte include, for example, LiCF₃SO₃, and LiClO₄.

The prior art describes several examples of solid polymeric electrolyte cells. U.S. Patent Number 4,925,751 discloses a solid state laminar cell containing an alkali metal anode, a solid ionically conducting electrolyte, a composite cathode and a carrier. The composite cathode comprises active material, a conductive filler and an ionically conductive electrolyte. The electrolyte comprises a liquid monomeric or prepolymeric curable composition and an ionisable alkali metal salt. During assembly of this cell, the composite cathode mixture is applied to a current collector and then a layer of polymer electrolyte is coated over this mixture. The polymer electrolyte layer and the polymer in the cathode are then cured in place, after which a thin foil anode layer is applied to the polymeric surface. U.S. Patent Number 4,748,542 and U.S. Patent Number 4,638,407 both disclose solid state capacitors and multicell batteries in which a layer of a solid polymer electrolyte is laminated to a layer of the cathode and anode.

Another example of a solid electrolyte cell is disclosed in U.S. Patent Number 4,594,299. The cell disclosed in this patent is made by protecting an electrode, such as a lithium electrode, with an ionically conductive polymer. The resulting electrode can then be combined with a cathode to form the electrochemical cell.

A further solid polymeric electrolyte is described in U.S. Patent Number 4,654,279. The electrolyte in this patent is a two phase interpenetrating network consisting of a mechanically supporting phase of a continuous network of a crosslinked polymer and an ionically conducting phase. A suitable amount of a metal salt is then added to the electrolyte to provide ionic conductivity.

U.S. Patent Number 4,589,197 discloses a composite cathode sheet made from a solution of an active cathode material and a low molecular weight polymer, such as polyethylene oxide, in a solvent such as acetonitrile. The polymer preferably contains an electrolyte salt.

Despite the advantages of polymer electrolyte cells, as discussed above, there are certain problems associated with the use of such electrolytes, and particularly with solid polymer electrolytes. Three common problems which are often encountered are: (1) the cells typically contain only a low volume of active cathode material; (2) the electrolyte has little mechanical stability; and (3) there are safety problems associated with the assembly of live high area cells without the ability to check for shorts.

The cells described in each of U.S. Patents Number 4,925,751, 4,748,542 and 4,638,407 discussed above will exhibit each of these three problems. In the devices of each of these patents, the cathode mixture comprises a prepolymer and an ionisable salt. This mixture will not, therefore, have a sufficiently high volume of active cathode material, and certainly not as high a volume as a conventional cell. The active life of the cell will thus be reduced. An ionisable salt also forms part of the polymer electrolyte layer; therefore, when this is applied as a film to the cathode mixture, it will be in the form of a tacky viscous gel which will be difficult to work with and will be susceptible to puncture by any of the other cell components, such as the metallic current collector. Furthermore, the resulting cathode and electrolyte layer combination is ionically conductive and thus, when this combined component is assembled with the anode, the device becomes an active electrochemical cell during the assembly process. There are clear disadvantages associated with this.

In U.S. Patent 4,589,197, which discloses a solution of active cathode material and low molecular weight polymer in a solvent, as discussed above, the choice of polymers is, in practice, limited to low molecular weight polymers, since the polymer must be dissolved in a solvent and cast to form a sheet.

It is apparent, therefore, that there are problems associated with currently available electrochemical cells containing polymer electrolytes.

The present invention overcomes the above problems and provides a process for preparing an electrochemical cell employing a polymer electrolyte, which cells have a high volume of active cathode material and which process allows easy and safe assembly of the cell.

In accordance with the above, the present invention provides, in a first aspect, a process for the preparation of an electrochemical cell that contains a polymer electrolyte, comprising preparing a cathode by mixing an active cathode material with sufficient of an ionically nonconductive prepolymeric composition to bind the cathode material and applying the resulting ionically nonconductive mixture to an electrically conductive current collector, polymerising the prepolymeric composition, forming an electrode assembly with an anode and electrically insulating ion permeable material disposed between the cathode and anode, loading the resulting electrode assembly into a cell housing and, thereafter, adding an amount of an ionisable electrolyte salt solution sufficient to provide ionic conductivity to the polymer film in the cathode and between the cathode and anode to form an active electrochemical cell wherein, prior to placing the assembly in the housing, a continuity check can be made on the assembly to detect any shorts.

The process of the present invention uses active cathode material. The precise nature of the active cathode material is not critical to the present invention so long as this can be bound with or by an ionically nonconductive prepolymeric composition. The choice of material depends on various factors, such as the type of anode material to be employed in the cell and the intended use of the cell. Examples of suitable active cathode materials include: the transition metal chalcogenides, particularly the transition metal oxides and sulphides, such as cupric sulphide (CuS), cupric oxide (CuO), iron sulphides, vanadium pentoxide (V₂O₅), V₆O₁₃, cobalt oxides, titanium disulphide (TiS₂), tungsten trioxide (WO₃), molybdenum trioxide (MoO₃), molybdenum disulphide (MoS₂); transition-metal polysulphides; and lithiated metal oxides and sulphides, such as LiₓFeS₂, LiₓTiS₂, lithiated cobalt and/or nickel oxides or lithiated manganese oxides. Electrically conductive polymers, such as polypyrrole or polyaniline, may also be used. Preferred active cathode materials include iron sulphide (FeS₂), manganese dioxide (MnO₂), titanium disulphide (TiS₂), vanadium pentoxide (V₂O₅), V₆O₁₃, and tungsten trioxide (WO₃). When using a lithium anode and a 1.5 volt cell, we generally prefer to use an iron sulphide (FeS₂) cathode material.

The process of the present invention uses sufficient of an ionically nonconductive prepolymeric composition to bind the cathode material. By "prepolymeric", as used herein, is meant that the composition may be polymerised.

Prepolymeric compositions suitable for use in the present invention are preferably both electrically insulating and ionically nonconductive. The composition may include any one or combination of a suitable polymerisable monomer, comonomer or oligomer. The composition may also be curable and crosslinkable. Suitable compositions include ethylenically unsaturated monomers, comonomers and oligomers, alkylene oxide monomers, comonomers and oligomers, acrylic acid-based monomers, comonomers and oligomers, and mixtures of such compounds. Specific examples of materials suitable for use in the prepolymeric composition include: polyalkylene oxides, such as polypropylene oxide, polyethylene oxide or polyethylene-polypropylene oxide; polyalkylene glycols, such as polyethylene glycol; mixtures of polyalkylene oxides and glycols; polyethylene glycol acrylates, diacrylates and triacrylates; modified siloxanes; urethanes with polyethylene glycol side chains; epoxides and acrylated epoxides. Mixtures of low molecular weight polyethylene oxide and one or more polyethylene glycol acrylates, e.g. diacrylates and triacrylates, are preferred.

When the cathode material is dispersed in an ionically nonconductive polymer film, any of the conductive polymer electrolytes discussed above can be used as the film. In addition, any of the polymer electrolytes known in the art, for example as disclosed in U.S. Patents Number 4,638,407; 4,925,751; 5,011,501; and 5,041,346, may be used as the cathode polymer film, provided that the resultant polymer film is ionically nonconductive. This is achieved by omitting the ionisable electrolyte salt during preparation of the cathode polymer film.

The composition is ionically nonconductive when mixed, polymerised, cured and crosslinked in the presence of the active cathode material. However, the composition may be rendered ionically conductive by the absorption of an ionisable electrolyte salt. This absorption may be carried out in any suitable fashion, and preferably, by absorption from a solution of the salt in an organic solvent.

The composition may be polymerised, cured or crosslinked by the use of any conventional technique, such as radiation or heat. If desired, a polymerisation initiator may be present. The choice of initiator may depend, for example, on the types of monomers or prepolymers used in the composition. Examples of suitable polymerisation initiators are disclosed in Encyclopaedia of Polymer Science and Engineering, Vol. 2, "Anionic Polymerisation and Cationic Polymerisation", pp. 143 to 145. A preferred example is 2,2'-azobisisobutyronitrile.

The process of the present invention may use components in addition to those discussed above. Examples of such additional components include electronic conductors and voltage regulators, such as reducible metal additives. Preferred electronic conductors include graphite, acetylene black, carbon fibres, compatible metal powders or fibres, or electrically conductive polymers, such as polypyrrole or polyaniline.

Typically, when measured in the absence of the ionisable electrolyte salt, the amount of the active cathode material in the finished cathode is at least about 50%, preferably at least about 60%, and more preferably at least about 70% by volume The amount of the prepolymeric composition used is an amount sufficient to bind the active cathode material and preferably to form a polymer film having the active cathode material dispersed throughout. This amount can vary, but typically ranges from about 10% to about 45% by volume, and preferably, from about 20% to about 35% by volume.

The present invention also provides a process for making an electrochemical cell comprising a polymer electrolyte, as prepared in accordance with the process described above.

The above process will be explained in more detail below, with relation to the preparation of an electrochemical cell.

In one embodiment, the above process of the present invention comprises:
(i) preparing a cathode by contacting active cathode material with a binding amount of an ionically nonconductive prepolymeric composition;
(ii) applying the resulting composition to an electrically conductive current collector;
(iii) polymerising the prepolymeric composition to form a film in which the active cathode material is dispersed;
(iv) placing an active anode material next to the cathode;
(v) disposing an electrically insulating material between the cathode and anode to form an electrode assembly;
(vi) placing the electrode assembly inside a housing for the cell; and
(vii) adding an amount of an ionisable electrolyte salt solution sufficient to provide ionic conductivity to the polymer film in the cathode and between the cathode and the anode.

In an alternative embodiment, the present invention provides a process for making an electrochemical cell that contains a polymer electrolyte comprising:
a) preparing a cathode by contacting active cathode material with a binding amount of an ionically nonconductive prepolymeric composition, the active cathode material forming at least 50% of the mixture by volume;
b) applying the cathode and prepolymeric composition mixture to an electrically conductive carrier and polymerising the prepolymeric composition to provide a polymer film having active cathode material dispersed throughout;
c) placing an active anode material next to the ionically nonconductive cathode with an electrically insulating ion permeable material disposed between the cathode and the anode to form an electrode assembly; and
d) placing the electrode assembly inside a housing for the cell, and adding an amount of an ionisable electrolyte salt solution sufficient to provide ionic conductivity to the polymer film in the cathode and between the cathode and anode to form an active electrochemical cell.

The process of the present invention includes contacting the active cathode material with a binding or film-forming amount of the prepolymeric composition. If desired, an organic solvent or plasticiser may be employed to improve the viscosity of the mixture. Typically the solvent employed will also act as a plasticiser and, in such cases, a solvent with a high boiling point is desired. Examples of suitable solvents include: alkylene carbonates, such as propylene carbonate or ethylene carbonate; 3-methyl-2-oxazolidone; dimethoxy tetraglycol (tetraglyme) and sulpholane or mixtures thereof. The precise amount of the plasticising solvent used is not essential to the present invention, provided that sufficient of the solvent is used to plasticise the mixture. Solvents which do not also act as plasticisers may also be used and, in this case, we prefer to use a low boiling point solvent, such as trichloroethylene, dimethoxyethane, triethylene glycol dimethyl ether (triglyme), dioxolane or tetrahydrofuran. The amount of such solvent used is not critical to the present invention, so long as this is sufficient to improve the viscosity of the mixture and so long as this can be removed easily after application of the cathode mixture to the current collector. We generally find that only a small amount of solvent is required. Mixtures of solvents may also be used and, in certain circumstances mixtures are preferred, providing a balance and diversity of properties to the mixture.

Alternatively, an amount of the ionisable electrolyte salt may be used to alter the viscosity of or to plasticise the cathode mixture, so long as the amount used is less than that needed to render the cathode ionically conductive. This method of altering the viscosity or plasticising the mixture is less preferred.

Once the cathode mixture has been prepared, it is applied to an electrically conductive current collector. The choice of current collector is not essential to the present invention, so long as it is electrically conductive. Typical such collectors include: a metal foil, for example a foil of aluminium, nickel or copper; a metal screen; a metallic or carbon foam, for example a nickel foam; or a metallic or carbon mat, for example a nickel or carbon fiber mat. An example of a preferred carrier is a metallic foil, such as aluminium foil.

The cathode mixture may be applied to the current collector by any one of several different methods. Examples of appropriate methods of application include roll coating, doctor blading and imbed-extrusion.

Once the cathode mixture has been applied to the current collector, any solvent used to affect the viscosity may be removed, for example by standard techniques, and the prepolymer composition may be polymerised, cured and/or crosslinked, for example using the techniques discussed above. The resultant article is a solid, dry, flexible, ionically nonconductive polymer film with active cathode material dispersed throughout, adhered to an electrically conductive current collector. The thickness of the polymer film may vary and is not critical to the present invention. Typically the thickness ranges from about 0.0508 to about 0254 mm (about 2 to about 10 mils), and preferably from about 0.0762 to about 0.154 mm (about 3 to about 6 mils).

Polymerisation, curing or crosslinking of the prepolymer composition in the cathode may result in the formation of a continuous polymer film over the surface of the cathode. In this case, no active cathode material is exposed on the surface and the polymer film may then be used as the separator between the cathode and the anode. However, in order to ensure proper separation between the cathode and the anode, it may be desirable to employ another electrically insulating ion permeable separator between the cathode and the anode. This separator may be a microporous membrane or sheet, paper, plastic screen or a polymer film.

When it is desired to include a separator, we prefer to use a polymer film, and preferably a film which includes the same or similar components to those that form the prepolymer composition in the cathode. Thus, when using a lithium foil anode, for example, we prefer to use a film of polyethylene oxide. It is preferred that the polymer film used for the separator does not contain any ionisable salt, thus preventing the cell from being electrochemically active until after assembly is completed. The separator may be applied to either the cathode or the anode, so long as it is disposed between them in the completed electrode assembly. When a polymer film is employed as separator, this is preferably applied to one or both surfaces of the anode. The polymer film forming the separator may be sprayed, laminated or roll coated, to form a tough thin amorphous flexible film on the electrode.

The active anode material used in the process of the present invention may include active metals, such as zinc or aluminium; alkali metals; alkaline earth metals; and alkali metal interchelated carbon or graphites, such as lithium interchelated carbon or graphite, or composites thereof. Preferred active anode materials include alkali metals, especially lithium. Preferably, the anode is a foil of the metal, although the anode may also be a composite of a foil of the metal laminated with a layer of a polymeric composition.

The anode and separator, when used, are placed next to the cathode to form the completed electrode assembly. If present, the separator is disposed between the cathode and the anode, as discussed above. Any type of electrode assembly may be used in the electrochemical cells of the present invention. Suitable electrode assemblies include: a jelly roll; flat single multicell assemblies and stacked flat multicell assemblies. When using a jelly roll assembly, the cathode, separator (when used) and anode are wound and then placed in the cell housing. Prior to placing the assembly in the housing a continuity check can be made on the assembly to detect any shorts.

The cell housing may be of any material conventionally used for this component, for example plastic or metal, such as stainless steel or nickel plated steel, metal coated plastic, plastic-metal laminate sheets, and impermeable inorganic-coated plastic, such as SiO or SiOₓ-coated plastic.

The assembly of the cell may be completed by the addition of an amount of an ionisable electrolyte salt to render the polymer film in the cathode and the separator between the cathode and the anode (when used) ionically conductive. Examples of suitable salts for non-aqueous cell systems include alkali metal salts that have the same cation as the anode metal, such as LiCF₃SO₃, LiClO₄, LiBF₄, LiAsF₆, Li(CF₃SO₂)₂N, and the like. For aqueous cells systems, ZnCl₂, AlCl₃, KOH, and the like are suitable salts.

The amount of the salt employed will vary depending on, for example, the type of active cathode material, the type of active anode material, the type of polymer employed in the cell, and the intended use of the cell. Typically, the amount will range from about 0.1 M to about 10.0 M, preferably from about 0.5 M to about 3.0 M, and more preferably from about 1.0 M to about 1.5 M. The salt is suitably added to the cell as a solution of the salt in a solvent. This solvent may, if desired, be that solvent acting as a plasticiser for the cathode mixture. For non-aqueous cells, suitable solvents include non-aqueous organic solvents such as dioxolane, dimethoxyethane, 3-methyl-2-oxazolidone, propylene carbonate, ethylene carbonate, triethylene glycol dimethyl ether (triglyme), diemethoxy tetraglycol (tetraglyme), sulpholane and 3,5-dimethylisoxazole. For aqueous cell systems, water may be used as the solvent.

The cell is suitably sealed by using a cover with a sealing gasket. The cover, if metallic, may be in contact with one of the electrodes to provide a terminal for the cell and may contain a pressure relief vent. For flat cell constructions, the housing may be sealed with metal or plastic sheets, or plastic-metal laminate sheets.

The electrochemical cells prepared by the process of this invention may be aqueous or non-aqueous, primary or rechargeable and have a solid polymer electrolyte. The electrolyte is formed after the prepolymer composition in the cathode is polymerised, and the electrode assembly is made and placed in the cell, at which point the ionisable salt is added. Since the ionisable salt is not added until after the electrode assembly is completed, if any short is present, no current will flow, and any potentially hazardous situations are avoided.

Another advantage of the process of the present invention is that since the salt is not added until after assembly of the cell is completed, the cathode can contain a large volume of active cathode material.

Yet another advantage of the process of the present invention is that after the prepolymeric composition is polymerised, the cathode is in the form of a solid dry flexible film that can be easily assembled with the anode.

Still yet another advantage of the process of the present invention is that when the salt is added as a solution in a solvent which serves as a plasticiser for the polymer the polymer composition in the cathode mixture will swell to provide good electrode and electrolyte interfacial contact.

## Claims

1. A process for the preparation of an electrochemical cell that contains a polymer electrolyte, comprising preparing a cathode by mixing an active cathode material with sufficient of an ionically nonconductive prepolymeric composition to bind the cathode material and applying the resulting ionically nonconductive mixture to an electrically conductive current collector, polymerising the prepolymeric composition, forming an electrode assembly with an anode and electrically insulating ion permeable material disposed between the cathode and anode, loading the resulting electrode assembly into a cell housing and, thereafter, adding an amount of an ionisable electrolyte salt solution sufficient to provide ionic conductivity to the polymer film in the cathode and between the cathode and anode to form an active electrochemical cell wherein prior to placing the assembly in the housing, a continuity check can be made on the assembly to detect any shorts.

2. A process for making an electrochemical cell according to Claim 1 comprising:
a) preparing a cathode and prepolymeric composition mixture by contacting active cathode material with a binding amount of an ionically nonconductive prepolymeric composition, the active cathode material forming at least 50% of the mixture by volume;
b) applying the cathode and prepolymeric composition mixture to an electrically conductive carrier and polymerising the prepolymeric composition to provide a polymer film thereon having active cathode material dispersed throughout;
c) placing an active anode material next to the ionically nonconductive cathode with an electrically insulating ion permeable material disposed between the cathode and the anode to form an electrode assembly;
d) placing the electrode assembly inside a housing for the cell, and
e) adding an amount of an ionisable electrolyte salt solution sufficient to provide ionic conductivity to the polymer film in the cathode and between the cathode and anode to form an active electrochemical cell.

3. A process according to Claim 1 or 2, wherein polymerising the prepolymeric composition comprises curing and crosslinking.

4. A process according to any preceding Claim, in which the active cathode material is dispersed in an ionically nonconductive polymer film, which film is in contact with an electrically conductive current collector.

5. A process according to any preceding Claim, wherein the active cathode material is a transition metal chalcogenide.

6. A process according to Claim 5, wherein the active cathode material is FeS₂, MnO₅, TiS₂, V₂0₅, V₆O₁₃ or WO₃.

7. A process according to any preceding Claim, wherein the prepolymeric composition comprises ethylenically unsaturated monomers, comonomers and oligomers; alkylene oxide monomers, comonomers and oligomers; acrylic acid-based monomers, comonomers and oligomers; or mixtures of such monomers, comonomers and oligomers, as the polymerisable component.

8. An process according to Claim 7, wherein the polymerisable component is selected from polypropylene oxide, polyethylene oxide, polyethylene-polypropylene oxide, polyethylene glycol, polyethylene glycol acrylates, diacrylates and triacrylates, modified siloxanes, urethanes with polyethylene glycol side chains, epoxides and acrylated epoxides, and mixtures of such compounds.

9. A process according to any preceding Claim, wherein the current collector is a metallic foil.

10. A process according to any preceding Claim, wherein the active cathode material is FeS₂, the prepolymeric composition is a mixture comprising polyethylene glycol acrylate, polyethylene oxide and polyethylene glycol diacrylate, and the current collector is aluminium foil.

11. A process according to any preceding Claim, wherein the active cathode material is FeS₂; the prepolymeric composition is comprised of polyethylene oxide, polyethylene glycol acrylate, and polyethylene glycol diacrylate; the cathode current collector is aluminium foil, the anode is lithium; the electrically insulating ion permeable material is a polymer film of polyethylene oxide; the electrode assembly is a jelly roll assembly and the ionisable electrolyte salt solution is 1.5 M LiCF₃SO₃ in a solvent comprising dioxolane, propylene carbonate, and dimethoxyethane.

## Patentansprüche

1. Verfahren zur Herstellung einer elektrochemischen Zelle, die einen Polymerelektrolyten enthält, wobei das Verfahren nachfolgende Schritte enthält: das Herstellen einer Kathode durch Mischen eines aktiven Kathodenmaterials mit einer ausreichenden Menge einer ionisch nichtleitenden Vorpolymerisatzusammensetzung. um das Kathodenmaterial zu binden und die sich ergebende ionisch nichtleitende Mischung auf einen elektrisch leitenden Stromabnehmer aufzutragen, das Polymerisieren der Vorpolymerisatzusammensetzung, das Bilden eines Elektrodenaufbaus mit einer Anode und einem elektrisch isolierenden ionendurchlässigen Material, das zwischen der Kathode und der Anode angeordnet ist, das Unterbringen des sich ergebenden Elektrodenaufbaus in einem Zellengehäuse, und danach das Zugeben einer Menge einer ionisierbaren Elektrolytsälzlösung in einer ausreichenden Menge, um dem Polymerfilm in der Kathode und zwischen der Kathode und Anode eine ionische Leitfähigkeit zu verleihen, um eine aktive elektrochemische Zelle zu bilden, in welcher, bevor der Aufbau in dem Gehäuse untergebracht wird, eine Leitfähigkeitskontrolle an dem Aufbau durchgeführt werden kann, um irgendwelche Kurzschlüsse zu detektieren.

2. Verfahren zum Herstellen einer elektrochemischen Zelle gemäß Anspruch 1, das nachfolgende Schritte enthält:
a) Herstellen einer Mischung aus einer Kathodenzusammensetzung und einer Vorpolymerisatzusammensetzung durch Zusammenbringen eines aktiven Kathodenmaterials mit einer eine Bindung verursachenden Menge einer ionisch nichtleitenden Vorpolymerisatzusammensetzung, wobei das aktive Kathodenmaterial mindestens 50% der Mischung, bezogen auf das Volumen, ausmacht;
b) Auftragen der Mischung aus der Kathodenzusammensetzung und der Vorpolymerisatzusammensetzung auf einem elektrisch leitenden Träger und Polymerisierung der Vorpolymerisatzusammensetzung, um einen Polymerfilm auf demselben bereitzustellen, welcher ein ganz und ganz dadurch dispergiertes aktives Kathodenmaterial enthält;
c) Anordnen eines aktiven Anodenmaterials in nächster Nähe zu der ionisch nichtleitenden Kathode, wobei ein elektrisch isolierendes ionendurchlässiges Material zwischen der Kathode und der Anode angeordnet ist, um einen Elektrodenaufbau zu bilden:
d) Unterbringen des Elektrodenaufbaus im Inneren eines Gehäuses für die Zelle; und
e) Zugeben einer Menge einer ionisierbaren Elektrolytsalzlösung, die ausreichend ist, eine ionische Leitfähigkeit zu dem Polymerfilm in der Kathode und zwischen der Kathode und der Anode zu liefern, um eine aktive elektrochemische Zelle zu bilden.

3. Verfahren gemäß Anspruch 1 oder 2, in dem das Polymerisieren der Vorpolymerisatzusammensetzung ein Aushärten und Vernetzen beinhaltet.

4. Verfahren gemäß irgendeinem vorausgehenden Anspruch, in dem das aktive Kathodenmaterial in einem ionisch nichtleitenden Polymerfilm dispergiert ist, wobei der Film in Kontakt mit einem elektrisch leitenden Stromabnehmer steht.

5. Verfahren gemäß irgendeinem vorausgehenden Anspruch, in dem das aktive Kathodenmaterial ein Chalkogenid eines Übergangsmetalls ist.

6. Verfahren gemäß Anspruch 5, in dem das aktive Kathodenmaterial FeS₂, MnO₅, TiS₂, V₂0₅, V₆0₁₃ oder W0₃ ist.

7. Verfahren gemäß irgendeinem vorausgehenden Anspruch, in dem die Vorpolymerisatzusammensetzung ethylenungesättigte Monomere, Comonomere und Oligomere; Monomere, Comonomere und Oligomere aus Alkylenoxid; auf Acrylsäure basierende Monomere, Comonomere und Oligomere; oder Mischungen von solchen Monomeren, Comonomeren und Oligomeren als die polymerisierbare Komponente enthält.

8. Verfahren gemäß Anspruch 7, in dem die polymerisierbare Komponente ausgewählt wird aus Polypropylenoxid, Polyethylenoxid, Polyethylen; polypropylenoxid, Polyethylenglykol, Polyethylenglykolacrylaten, -diacrylaten und -triacrylaten, modifizierten Siloxanen, Urethanen mit Polyethylenglykol-Seitenketten, Epoxiden und acrylierten Epoxiden sowie Mischungen aus solchen Verbindungen.

9. Verfahren gemäß irgendeinem vorausgehenden Anspruch, in dem der Stromabnehmer eine Metallfilm ist.

10. Verfahren gemäß irgendeinem vorausgehenden Anspruch, in dem das aktive Kathodenmaterial FeS₂ ist, die Vorpolymerisatzusammensetzung eine Mischung ist, die Polyethylenglykolacrylat, Polyethylenoxid und Polyethylenglykoldiacrylat enthält, und der Stromabnehmer eine Aluminiumfilm ist.

11. Verfahren gemäß irgendeinem vorausgehenden Anspruch, in dem das aktive Kathodenmaterial FeS₂ ist; die Vorpolymerisatzusammensetzung Polyethylenoxid, Polyethylenglykolacrylat und Polyethylenglykoldiacrylat enthält; der Stromabnehmer an der Kathode eine Aluminiumfilm ist; die Anode Lithium ist; das elektrisch isolierende ionendurchlässige Material ein Polymerfilm aus Polyethylenoxid ist; der Elektrodenaufbau eine Rollenzusammenstellung ist und die ionisierbare Elektrolytsalzlösung 1,5 M LiCF₃S0₃ in einem Lösungsmittel ist, das Dioxolan, Propylencarbonat und Dimethoxyethan enthält.

## Revendications

1. Procédé pour la préparation d'une cellule électrochimique contenant un électrolyte polymère, comportant les étapes: de préparation d'une cathode en mélangeant un matériau de cathode actif avec une quantité suffisante d'une composition de prépolymère non conductrice ioniquement pour lier le matériau de cathode et pour appliquer le mélange résultant non conducteur ioniquement sur un collecteur de courant électriquement conducteur, de polymérisation de la composition de prépolymère, de formation d'un assemblage d'électrode avec une anode et un matériau électriquement isolant perméable aux ions qui est disposé entre la cathode et l'anode, de chargement de l'assemblage d'électrode résultant dans un habitacle de cellule et, ensuite, d'ajout d'une solution saline d'électrolyte ionisable en une quantité suffisante pour fournir au film polymère une conductivité ionique dans la cathode et entre la cathode et l'anode pour former une cellule électrochimique active, dans laquelle on peut exécuter, préalablement à l'aménagement de l'assemblage dans l'habitacle, un contrôle de la continuité de l'assemblage afin de détecter d'éventuels courts-circuits.

2. Procédé pour la fabrication d'une cellule électrochimique suivant la revendication 1, comportant les étapes:
a) de préparation d'une cathode et d'un mélange d'une composition de prépolymère en mettant en contact du matériau de cathode actif avec une quantité liante d'une composition de prépolymère non conductrice ioniquement, le matériau de cathode actif constituant au moins 50% en volume du mélange:
b) d'application du mélange de la composition de cathode et de prépolymère à un véhicule électriquement conducteur et de polymérisation de la composition de prépolymère pour former sur celui-ci un film polymère possédant un matériau de cathode actif dispersé à travers celui-ci;
c) d'emplacement d'un matériau de cathode actif au voisinage immédiat de la cathode ioniquement non conductrice, alors qu'un matériau électriquement isolant perméable aux ions est disposé entre la cathode et l'anode pour former un assemblage d'électrode;
d) d'aménagement de l'assemblage d'électrode à l'intérieur d'un habitacle pour la cellule; et
e) d'ajout d'une solution saline d'électrolyte ionisable en une quantité suffisante pour fournir au film polymère une conductivité ionique dans la cathode et entre la cathode et l'anode pour former une cellule électrochimique active.

3. Procédé suivant la revendication 1 ou 2, dans lequel la polymérisation de la composition de prépolymère comporte un traitement de durcissement et de réticulation.

4. Procédé suivant l'une quelconque revendication précédente, dans lequel le matériau de cathode actif est dispersé dans un film polymère ioniquement non conducteur, ledit film étant en contact avec un collecteur de courant électriquement conducteur.

5. Procédé suivant l'une quelconque revendication précédente, dans lequel le matériau de cathode actif est un chalcogénide d'un métal de transition.

6. Procédé suivant la revendication 5, dans lequel le matériau de cathode actif est FeS₂, MnO₅, TiS₂, V₂0₅, V₆0₁₃ ou W0₃.

7. Procédé suivant l'une quelconque revendication précédente, dans lequel la composition de prépolymère comporte des monomères, des comonomères et des oligomères éthyléniquement non saturés; des monomères, des comonomères et des oligomères d'oxyde d'alkylène; des monomères, des comonomères et des oligomères à base d'acide acrylique; ou des mélanges de tels monomères, comonomères et oligomères, en tant que composante polymérisable.

8. Procédé suivant la revendication 7, dans lequel la composante polymérisable est choisie dans le groupe constitué d'oxyde de polypropylène, d'oxyde de polyéthylène, d'oxyde de polyéthylène-polypropylène, de polyéthylèneglycol, d'acrylates, de diacrylates et de triacrylates de polyéthylèneglycol, de siloxanes modifiés, d'uréthanes avec des chaînes latérales de polyéthylèneglycol, d'époxydes et d'époxydes d'acrylates, ainsi que de mélanges des ces composés.

9. Procédé suivant l'une quelconque revendication précédente, dans lequel le collecteur de courant est une feuille métallique.

10. Procédé suivant l'une quelconque revendication précédente, dans lequel le matériau de cathode actif est FeS₂, la composition de prépolymère est un mélange comprenant de l'acrylate de polyéthylèneglycol, du diacrylate d'oxyde de polyéthylène et de polyéthylèneglycol, et le collecteur de courant est une feuille en aluminium.

11. Procédé suivant l'une quelconque revendication précédente, dans lequel le matériau de cathode actif est FeS₂; la composition de prépolymère comporte de l'oxyde de polyéthylène, de l'acrylate de polyéthylèneglycol et du diacrylate de polyéthylèneglycol; le collecteur de courant de la cathode est une feuille en aluminium; l'anode est du lithium; le matériau d'isolation électrique perméable aux ions est un film polymère en oxyde de polyéthylène; l'assemblage de l'électrode est un assemblage enroulé et la solution saline d'électrolyte ionisable est du LiCF₃S0₃ 1,5 M dans un solvant comprenant dioxolane, carbonate de propylène et du diméthoxyéthane.
